(19)

Europäisches
Patentamt
European
Patent Office
Office européen
des brevets

(11) **EP 2 849 035 A1**

(12) **EUROPEAN PATENT APPLICATION**

published in accordance with Art. 153(4) EPC

(43) Date of publication:
**18.03.2015 Bulletin 2015/12**

(21) Application number: **13787902.9**

(22) Date of filing: **10.04.2013**

(51) Int Cl.:
*G06F 3/0346* (2013.01)     *G06F 3/023* (2006.01)
*G06F 3/0489* (2013.01)

(86) International application number:
**PCT/JP2013/060839**

(87) International publication number:
**WO 2013/168508 (14.11.2013 Gazette 2013/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.05.2012 JP 2012107410**

(71) Applicant: **Sony Corporation
Tokyo 108-0075 (JP)**

(72) Inventor: **TAKAGI, Yoshinori
Tokyo 108-0075 (JP)**

(74) Representative: **Boyd, Alan et al
D Young & Co LLP
120 Holborn
London EC1N 2DY (GB)**

(54)    **INFORMATION PROCESSING DEVICE, INFORMATION PROCESSING METHOD, AND
PROGRAM**

(57)    There is provided an information processing apparatus including an imaging unit configured to shoot an image showing that a phalanx of at least one or more fingers of a hand is in contact with a contacting object, an identification unit configured to identify an input element among a plurality of input elements, the input element corresponding to the phalanx in contact with the contacting object in a captured image from the imaging unit, and an output unit configured to output an identification result from the identification unit to a processing apparatus that performs input processing corresponding to the plurality of input elements.

**FIG. 1**

## Description

Technical Field

The present disclosure relates to an information processing apparatus, an information processing method, and a program.

Background Art

Information processing apparatuses perform a variety of processing on the basis of input operations (such as key operations) from users through operations units. As various types of information processing apparatus are today gaining widespread use, a variety of input methods are also devised.

Patent Literature 1 discloses, for example, an input apparatus including a switch attached to a fingertip of a glove and a sensor attached to the glove, the sensor reporting a way in which a finger of the glove bends. Patent Literature 2 discloses a technique for estimating an angle of a finger joint on the basis of an input signal from an electrode attached to an arm. Patent Literature 3 discloses a technique for performing pattern recognition on a posture of a hand area and using the recognition result as an input.

Citation List

Patent Literature

Patent Literature 1:    JP 2001-242983A
Patent Literature 2:    JP 2010-125287A
Patent Literature 3:    JP 2011-221699A

Summary of Invention

Technical Problem

The techniques of Patent Literatures 1 and 2 require a sensor and an electrode to be attached to a hand and an arm, which bothers a user. The technique of Patent Literature 3 can recognize only a small number of patterns, so that the technique is not suited for inputting characters and the like, which requires quite a few input elements.

The present disclosure then provides a method for allowing a user to perform an input operation intended by the user in a simple configuration.

Solution to Problem

According to the present disclosure, there is provided an information processing apparatus including an imaging unit configured to shoot an image showing that a phalanx of at least one or more fingers of a hand is in contact with a contacting object, an identification unit configured to identify an input element among a plurality of input elements, the input element corresponding to the phalanx in contact with the contacting object in a captured image from the imaging unit, and an output unit configured to output an identification result from the identification unit to a processing apparatus that performs input processing corresponding to the plurality of input elements.

Further, according to the present disclosure, there is provided an information processing method including shooting an image with an imaging unit, the image showing that a phalanx of at least one or more fingers of a hand is in contact with a contacting object, identifying an input element among a plurality of input elements, the input element corresponding to the phalanx in contact with the contacting object in a captured image from the imaging unit, and outputting an identification result from the identification unit to a processing apparatus that performs input processing corresponding to the plurality of input elements.

Still further, according to the present disclosure, there is provided a program for causing a computer to execute shooting an image with an imaging unit, the image showing that a phalanx of at least one or more fingers of a hand is in contact with a contacting object, identifying an input element among a plurality of input elements, the input element corresponding to the phalanx in contact with the contacting object in a captured image from the imaging unit, and outputting an identification result from the identification unit to a processing apparatus that performs input processing corresponding to the plurality of input elements.

Advantageous Effects of Invention

According to the present disclosure as described above, it is possible for a user to perform an intended input operation in a simple configuration.

Brief Description of Drawings

[FIG. 1] FIG. 1 is a diagram for describing an overview of an information processing system 1 according to an embodiment of the present disclosure.
[FIG. 2] FIG. 2 is a diagram illustrating an example of a functional configuration of an information processing apparatus 100 according to an embodiment.
[FIG. 3] FIG. 3 is a diagram for describing a relationship between keys on a numeric keypad and phalanges.
[FIG. 4] FIG. 4 is a diagram illustrating an example of a numeric keypad.
[FIG. 5] FIG. 5 is a diagram for describing an example of identifiers 114a to 1141 according to an embodiment.

[FIG. 6] FIG. 6 is a diagram illustrating an example of a captured image shot by an imaging unit 110 according to an embodiment.

[FIG. 7] FIG. 7 is a diagram for describing a first modified example of identification of a pressed phalanx.

[FIG. 8] FIG. 8 is a diagram for describing a second modified example of identification of a pressed phalanx.

[FIG. 9] FIG. 9 is a diagram for describing a third modified example of identification of a pressed phalanx.

[FIG. 10] FIG. 10 is a diagram for describing a fourth modified example of identification of a pressed phalanx.

[FIG. 11] FIG. 11 is a diagram illustrating a first example of detection of pressure timing of a phalanx.

[FIG. 12] FIG. 12 is a diagram illustrating a second example of detection of pressure timing of a phalanx.

[FIG. 13] FIG. 13 is a diagram for describing a relative motion vector Vp.

[FIG. 14] FIG. 14 is a flowchart for describing a first operation example of the information processing apparatus 100 according to an embodiment.

[FIG. 15] FIG. 15 is a flowchart for describing a second operation example of the information processing apparatus 100 according to an embodiment.

[FIG. 16] FIG. 16 is a flowchart for describing a third operation example of the information processing apparatus 100 according to an embodiment.

[FIG. 17] FIG. 17 is a flowchart for describing a fourth operation example of the information processing apparatus 100 according to an embodiment.

[FIG. 18] FIG. 18 is a diagram illustrating a display example of a display unit of the information processing apparatus 100 according to an embodiment.

[FIG. 19] FIG. 19 is a diagram illustrating a display example of a display unit of the information processing apparatus 100 according to an embodiment.

[FIG. 20] FIG. 20 is a diagram illustrating an example in which both hands are used.

[FIG. 21] FIG. 21 is an explanatory diagram illustrating a hardware configuration of the information processing apparatus 100 according to an embodiment.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will be made in the following order.

1. Overview of Information Processing System
2. Configuration Example of Information Processing Apparatus
3. Modified Example of Identification of Pressed Phalanx
4. Detection Example of Pressure Timing of Phalanx
5. Operation Example of Information Processing Apparatus
6. Hardware Configuration
7. Conclusion

<1. Overview of Information Processing System>

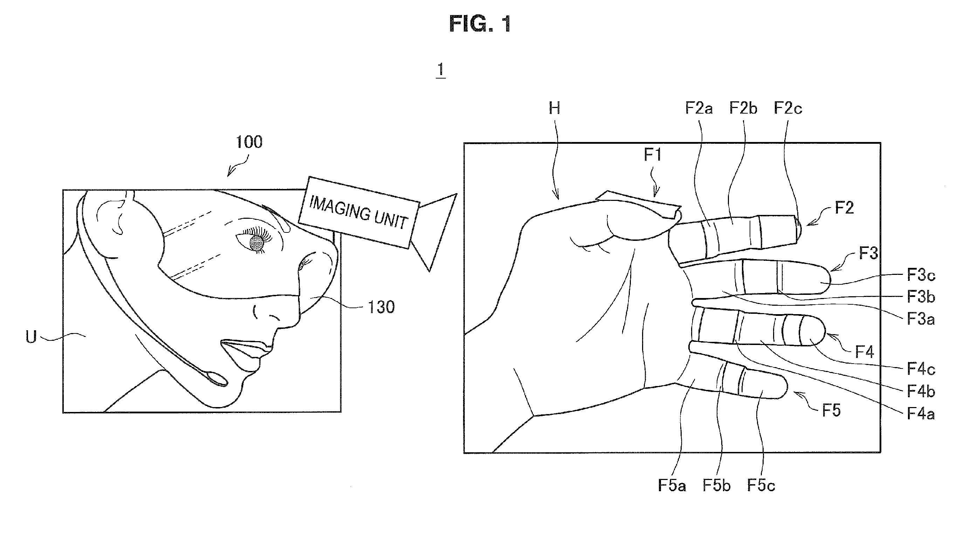

An overview of an information processing system 1 according to an embodiment of the present disclosure will be described with reference to FIG. 1. FIG. 1 is a diagram for describing the overview of the information processing system 1 according to an embodiment of the present disclosure.

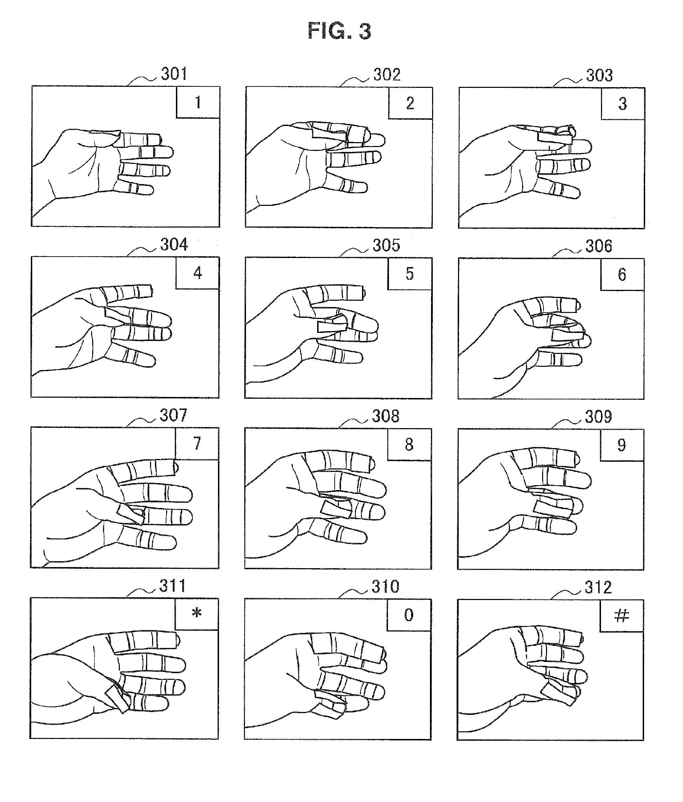

The information processing system 1 makes an input to a processing apparatus 150 (see FIG. 3) in accordance with a position at which a user U touches a finger of his or her hand H (specifically, any one of the phalanges sectioned by finger joints). In other words, the information processing system 1 allows a user to make an input with his or her hand instead of a numeric keypad and the like. The information processing system 1 includes an information processing apparatus 100 that identifies which phalanx of his or her finger the user U has touched (pressed).

Examples of the information processing apparatus 100 include a pair of glasses and a head mounted display that the user U wears in front of the eyes as illustrated in FIG. 1. The information processing apparatus 100 includes an imaging unit such as a camera at the same position as a position of the eyes of the user U, the imaging unit being capable of shooting an image of the hand H of the user U. Additionally, the imaging unit may also be set at a different position from the position of the eyes of the user U. The information processing apparatus 100 includes a display unit 130 capable of transparently displaying a hand of a user whose image is being shot.

The processing apparatus 150 executes input processing corresponding to a plurality of input elements (such as pushing a key down) on the basis of an identification result of the information processing apparatus 100. The processing apparatus 150 executes, for example, character input on the basis of the identification result of the information processing apparatus 100. Examples of the processing apparatus 150 include apparatuses such as personal computers, smartphones, PDAs, and mobile phones.

Even if there is no sensor or the like attached to a hand for detecting a movement of a finger, the information processing system 1 according to the present disclosure allows a user to shoot an image of the hand with an imaging unit and make an input using his or her hand. This allows a user to easily input a character and the like even when it is difficult, for example, for the user to attach a sensor or the like to a hand (for example, while the user is cooking, driving, playing with a child, and doing something minute such as processing something).

<2. Configuration Example of Information Processing Apparatus>

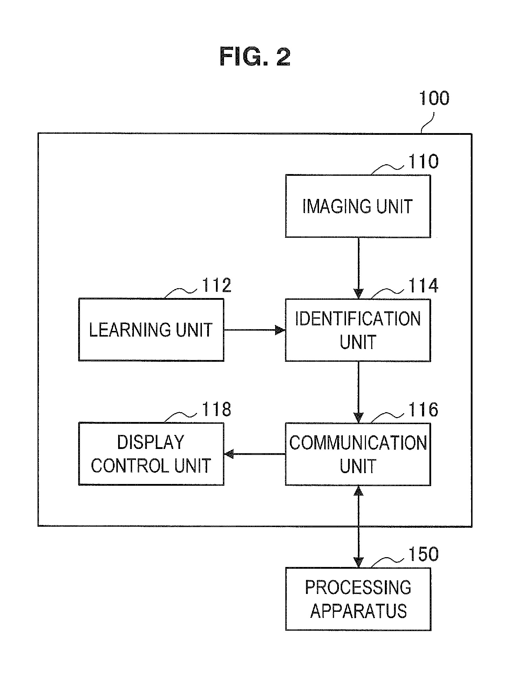

A configuration example of the information processing apparatus 100 according to an embodiment of the present disclosure will be described with reference to FIG. 2. FIG. 2 is a diagram illustrating an example of a functional configuration of the information processing apparatus 100 according to an embodiment of the present disclosure.

As illustrated in FIG. 2, the information processing apparatus 100 includes an imaging unit 110, a learning unit 112, an identification unit 114, a communication unit 116 as an example of an output unit, and a display control unit 118.

(Imaging Unit 110)

The imaging unit 110 is a camera capable of shooting still images and moving images, and shoots an image showing a hand of the user U as a subject. The imaging unit 110 may, for example, shoot an image showing that a phalanx of at least one or more fingers of a hand of the user U is pressed by a contacting object. The contacting object refers to the thumb of a hand of the user. The imaging unit 110 may shoot an image showing that the thumb F1 of a hand presses a phalanx of the other fingers (index finger F2, middle finger F3, ring finger F4, little finger F5) as illustrated in FIG. 1.

The imaging unit 110 may also shoot an image showing that a finger of a hand of the user U presses a phalanx of a finger of the other hand. The imaging unit 110 may also shoot an image showing that a pen or the like instead of a thumb presses a phalanx. The imaging unit 110 outputs captured images to the identification unit 114 one by one.

(Learning Unit 112)

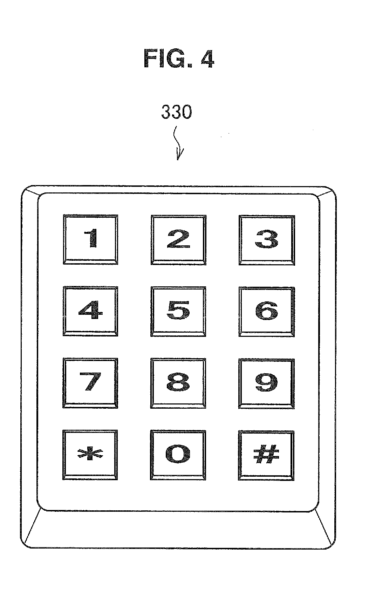

The learning unit 112 acquires in advance an image showing that a user presses a phalanx, and learns a relationship between the phalanx and a numeric keypad including a plurality of input elements (see FIG. 4). Let us assume here that each phalanx of the fingers (index finger, middle finger, ring finger, little finger) other than a thumb corresponds to each key (input element) on a numeric keypad. The learning unit 112 acquires, for example, images as illustrated in FIG. 3.

Index fingers, middle fingers, ring fingers, and little fingers are each sectioned into three phalanges by two joints. The three phalanges are referred to as proximal phalanx, middle phalanx, and distal phalanx from the base of the finger. Meanwhile, thumbs are sectioned into two phalanges by a single joint. The two phalanges are referred to as proximal phalanx and distal phalanx from the base of the thumb.

FIG. 3 is a diagram for describing a relationship between keys on a numeric keypad and phalanges. FIG. 4 is a diagram illustrating an example of a numeric keypad 330. States 301 to 310 in FIG. 3 shows that phalanges corresponding to the numbers "1," "2," ..., "9," and "0" on the numeric keypad 330 are touched. For example, the proximal phalanx of an index finger corresponds to the number "1," the middle phalanx of the index finger corresponds to the number "2," and the distal phalanx of the index finger corresponds to the number "3." In the same way, the proximal phalanx of a middle finger corresponds to the number "4," the middle phalanx of the middle finger corresponds to the number "5," and the distal phalanx of the middle finger corresponds to the number "6."

The state 311 in FIG. 3 shows that a phalanx corresponding to the sign "*" on a numeric keypad is touched, and the state 312 shows that a phalanx corresponding to the sign "#" is touched. Additionally, the learning unit 112 may also acquire an image for identifying a state in which a thumb does not press any phalanx of an index finger, a middle finger, a ring finger, or a little finger.

FIG. 3 shows that a tape 140 as an example of an identifying object is bonded to an area corresponding to a predetermined phalanx, the tape 140 facilitating the phalanx to be identified. Specifically, the tape 140 is staggered to the twelve phalanges of an index finger, a middle finger, a ring finger, and a little finger, which is not, however, exclusive. No tape may also be bonded to a phalanx.

(Identification Unit 114)

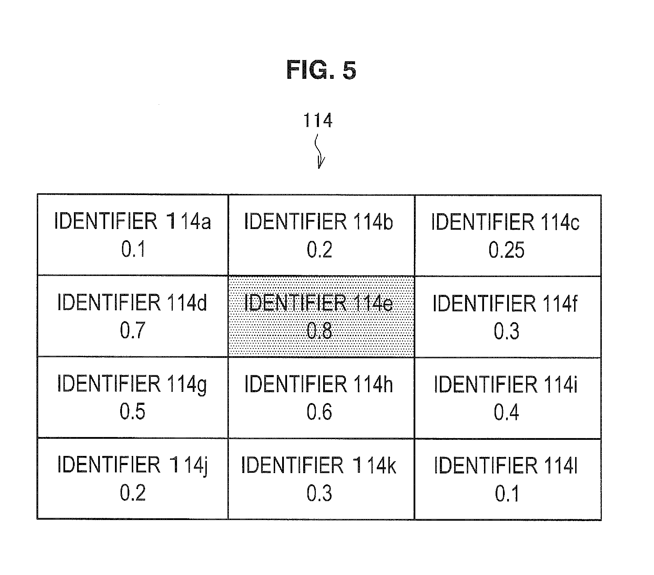

The identification unit 114 identifies a key on a numeric keypad corresponding to a phalanx pressed by a thumb in a captured image shot by the imaging unit 110. The identification unit 114 uses the captured image input from the imaging unit 110 and the relationship provided by the learning unit 112 to identify which phalanx of another finger has been pressed by a thumb in the captured image. The identification unit 114 includes twelve identifiers 114a to 114l for identifying the respective keys on a numeric keypad as illustrated in FIG. 5.

FIG. 5 is a diagram for describing an example of the identifiers 114a to 114l according to an embodiment. The identifiers 114a to 114c correspond to the proximal phalanx F2a, the middle phalanx F2b, and the distal phalanx F2c of the index finger F2 illustrated in FIG. 1, respectively. The identifiers 114d to 114f correspond to the proximal phalanx F3a, the middle phalanx F3b, and the distal phalanx F3c of the middle finger F3, respectively. Likewise, the identifiers 114g to 114i correspond to the proximal phalanx F4a, the middle phalanx F4b, and the distal phalanx F4c of the ring finger F4, respectively. The identifiers 114j to 114l correspond to

the proximal phalanx F5a, the middle phalanx F5b, and the distal phalanx F5c of the little finger F5, respectively. The identifiers 114a to 1141 each decide an evaluation value for the input captured image. Additionally, the evaluation values range from 0 to 1.

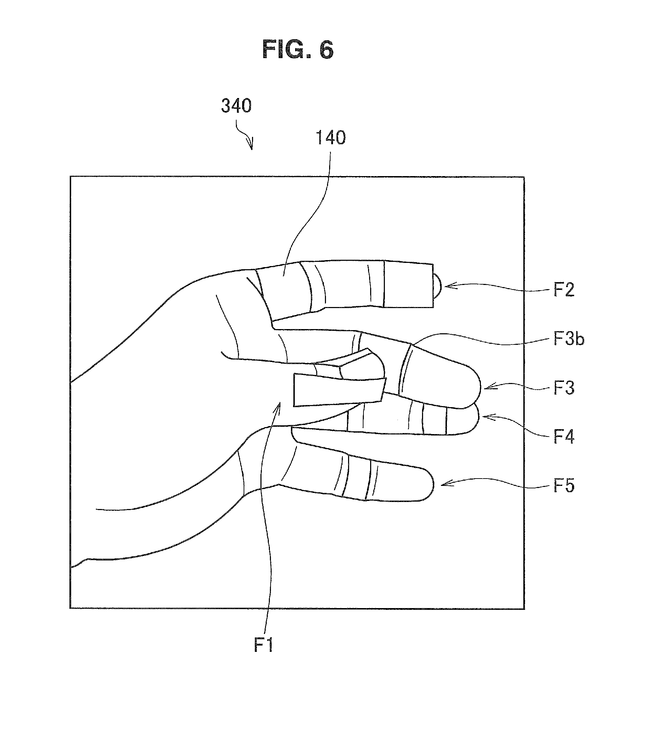

Let us assume here that a captured image illustrated in FIG. 6 is shot by the imaging unit 110 and input to the identification unit 114. FIG. 6 is a diagram illustrating an example of a captured image 340 shot by the imaging unit 110 according to an embodiment. In other words, the imaging unit 110 shoots an image of the thumb F1, which is a contacting object, and the tape 140 in an area corresponding to a phalanx of another finger. Since the thumb F1 of a user presses the middle phalanx F3b of the middle finger F3 among the four fingers F2 to F5 as illustrated FIG. 6, the identifier 114e has the highest evaluation value among the identifiers 114a to 1141.

The identification unit 114 outputs the evaluation values (evaluation values illustrated in FIG. 5) of the respective identifiers 114a to 1141 for the input image to the communication unit 116. The identification unit 114 may also perform image processing of extracting a hand area alone in the captured image that has been input to the identification unit 114 from the imaging unit 110 to identify the extracted image. In that case, the identification unit 114 has reduced processing burdens and the identification result can be enhanced in accuracy.

(Communication Unit 116)

The communication unit 116 transmits (outputs) the identification results (evaluation values of the respective identifiers 114a to 1141) of the identification unit 114 for the respective captured images to the processing apparatus 150. Additionally, the communication unit 116 transmits the identification results to the processing apparatus 150 one by one at predetermined intervals.

The processing apparatus 150 uses the identification results received one by one from the information processing apparatus 100 to decide which phalanx a user has pressed. For example, the processing apparatus 150 determines that a key corresponding to the identifier having the highest evaluation value has been input. The processing apparatus 150 then executes processing corresponding to the input on the basis of the determination result. Additionally, the processing apparatus 150 may also transmit a result of the input processing to the communication unit 116.

(Display Control Unit 118)

The display control unit 118 causes the display unit 130 to display the result of the input processing by the processing apparatus 150 on the basis of the identification result input from the communication unit 116. Additionally, the display unit 130 transparently displays a hand of a user whose image is being shot by the imaging unit 110. Accordingly, the display unit 130 displays the result of the input processing by the processing apparatus 150 while transparently displaying the hand of the user.

Although it has been described that the processing apparatus 150 determines that a key corresponding to the identifier having the highest evaluation value has been input, the following determination is also acceptable. In other words, the processing apparatus 150 may also determine that a key corresponding to the identifier having the highest evaluation values the most frequently within a predetermined time has been input. Meanwhile, the processing apparatus 150 may also determine that a key corresponding to the identifier having evaluation values exceeding a predetermined threshold the most frequently has been input. This allows for more accurate input with a hand.

<3. Modified Example of Identification of Pressed Phalanx>

It has been described that an image of a finger having the tape 140 bonded to a predetermined phalanx is shot as illustrated in FIG. 6 to allow the pressed phalanx to be identified, which is not, however, exclusive. A pressed phalanx may be identified in the following way.

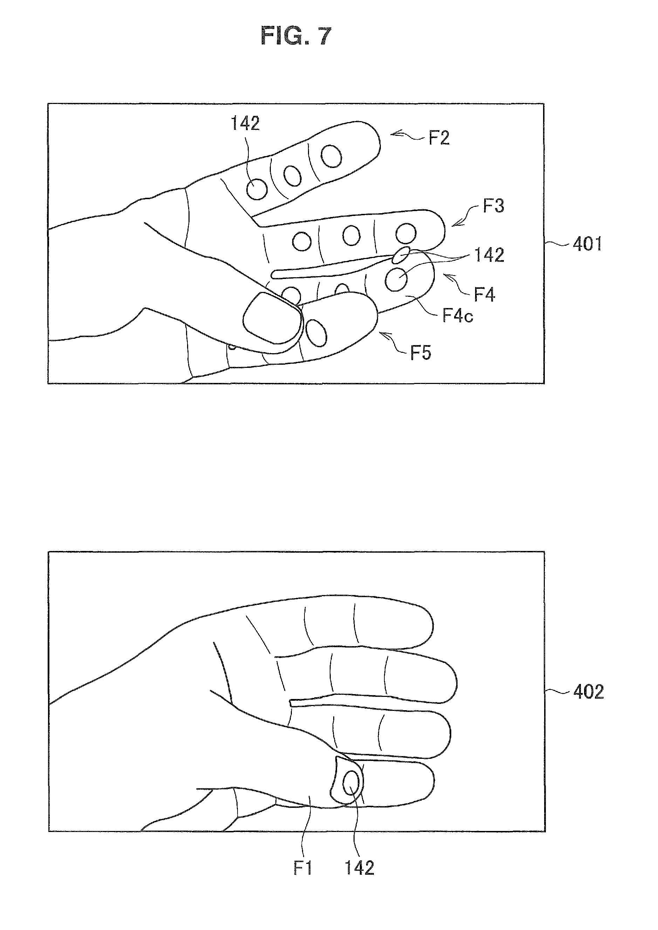

FIG. 7 is a diagram for describing a first modified example of identification of a pressed phalanx. A sticker 142 is bonded to a finger instead of the tape 140 in FIG. 7. Specifically, as illustrated in a state 401 in FIG. 7, the phalanges of the index finger F2, the middle finger F3, the ring finger F4, and the little finger F5 each have the sticker 142 bonded thereto. Additionally, the distal phalanx F4c of the ring finger F4 has the two stickers 142 bonded thereto in the state 401, which is different from the other phalanges because the other phalanges each have only the single sticker 142. In that case, the distal phalanx of the ring finger is used as a standard to identify each phalanx, thereby facilitating the twelve phalanges to be identified.

The sticker 142 may be bonded to the thumb F1 (specifically, the nail of the thumb) as illustrated in a state 402 in FIG. 7. This makes easier to identify the thumb F1's having pressed phalanges of the other fingers F2 to F5. A sticker is directly bonded to a finger in FIG. 7, which is not, however, exclusive. For example, a sticker may also be bonded at a position corresponding to each phalanx of a glove on a hand.

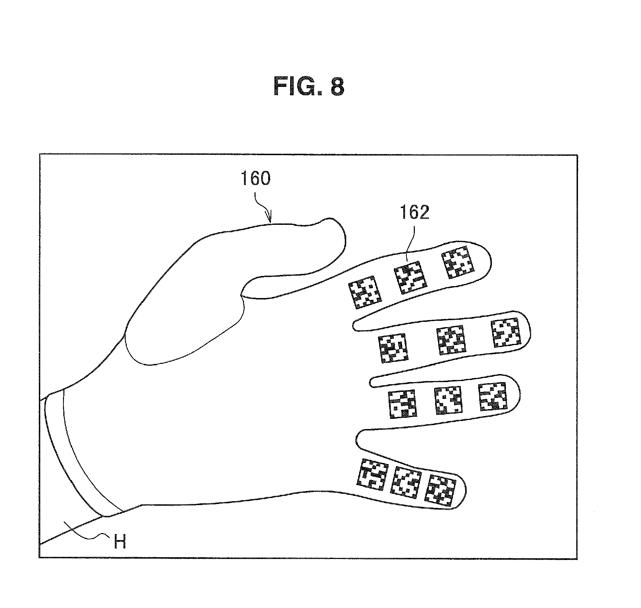

FIG. 8 is a diagram for describing a second modified example of identification of a pressed phalanx. An identifiable code 162 is bonded at a position corresponding to each phalanx of a glove 160 (example of a worn object) on a hand in FIG. 8. For example, an augmented reality (AR) code may be used as the code 162. The code 162 includes information for identifying each phalanx. This facilitates the identification unit 114 to identify a phalanx pressed by the thumb on the basis of a captured image including the code 162.

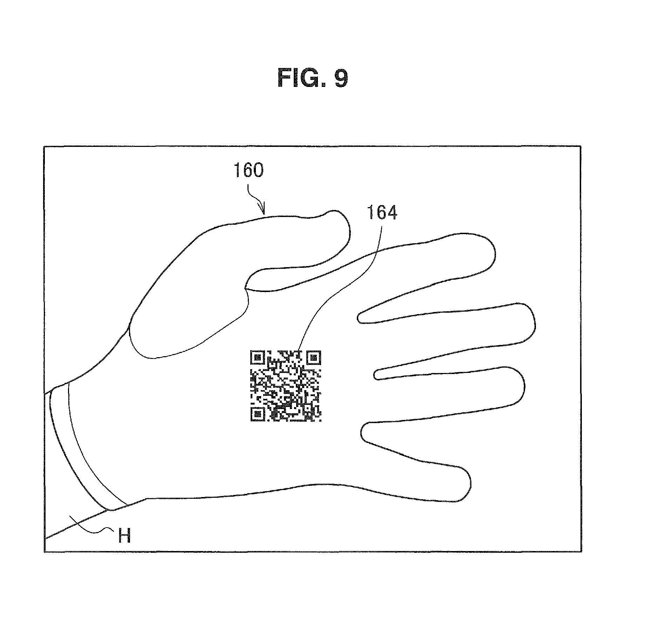

FIG. 9 is a diagram for describing a third modified example of identification of a pressed phalanx. A code 164 is displayed on the glove 160 on a hand in FIG. 9 when a thumb presses a phalanx. The code 164 includes identification information indicating a pressed phalanx. Accordingly, the imaging unit 110 shoots an image showing that the code 164 is displayed, so that the identification unit 114 can easily identify a phalanx pressed by a thumb.

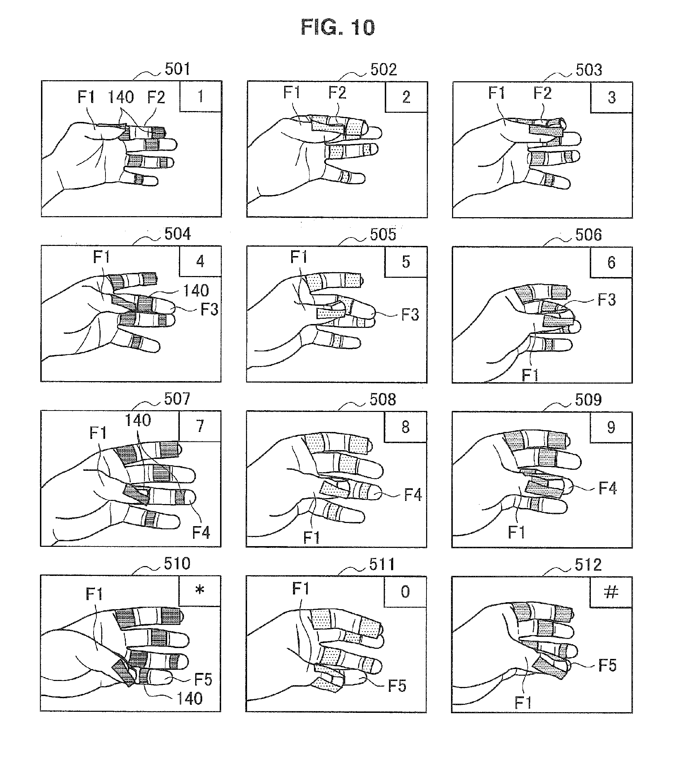

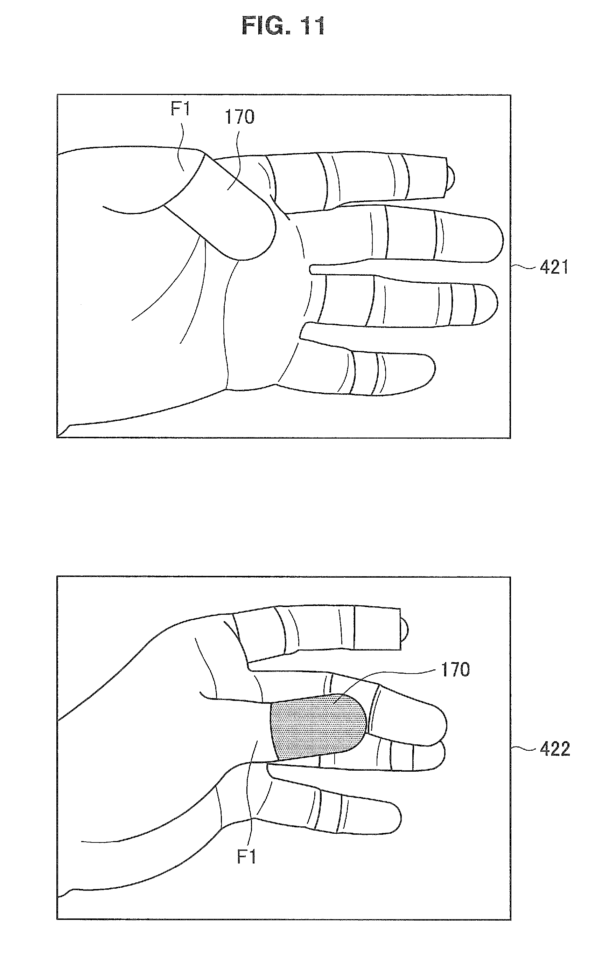

FIG. 10 is a diagram for describing a fourth modified example of identification of a pressed phalanx. The tapes 140 bonded to the index finger F2, the middle finger F3, the ring finger F4, and the little finger F5 can change their colors in FIG. 10. The tapes 140 can each display a color according to a phalanx pressed by the thumb F1. For example, when the thumb F1 presses the proximal phalanx F2a of the index finger F2 as illustrated in a state 501 in FIG. 11, the two tapes 140 of the index finger change the color from a default color to a first color. Meanwhile, the tapes 140 of the middle finger F3, the ring finger F4, and the little finger F5 remain in the default color. When the thumb F1 presses the middle phalanx F2b of the index finger F2 as illustrated in a state 502, the two tapes 140 of the index finger F2 alone change the color from the default color to a second color. When the thumb F1 presses the distal phalanx F2c of the index finger F2 as illustrated in a state 503, the two tapes 140 of the index finger F2 alone change the color from the default color to a third color.

When phalanges of the middle finger F3, the ring finger F4, and the little finger F5 are pressed as illustrated in states 504 to 512 in FIG. 10, the tapes 140 bonded to the respective fingers also change their colors in the same way. For example, when any of the proximal phalanges F3a, F4a, and F5a of the middle finger, the ring finger, and the little finger is pressed (states 504, 507, and 510), the tape 140 bonded to the pressed finger alone changes its color from the default color to the first color. Additionally, once the thumb F1 touches the palm, the tape returns the color to the default color. The imaging unit 110 then shoots an image of the color displayed by the tape in accordance with a pressed phalanx, so that the identification unit 114 can easily identify a phalanx pressed by the thumb. It has been described that the tape 140 changes its color among the first color to the third color, which is not, however, exclusive. The tape 140 may change its color for each phalanx of each finger (twelve colors, namely), or may change the brightness of a single color.

<4. Detection Example of Pressure Timing of Phalanx >

Next, some examples are used to describe detection examples of the pressure timing at which a phalanx is pressed.

FIG. 11 is a diagram illustrating a first example of detection of the pressure timing of a phalanx. A thumb stall 170 (example of an indicator) that changes its color is attached to a thumb in FIG. 11. When the thumb stall 170 presses another phalanx (state 422 in FIG. 11), the thumb stall 170 changes its color into a predetermined color (such as red). Shooting an image of the thumb stall 170 facilitates the identification unit 114 to detect the timing at which the phalanx is pressed. Additionally, once a thumb touches the palm (state 421), the thumb stall 170 changes its color into a default color (such as white).

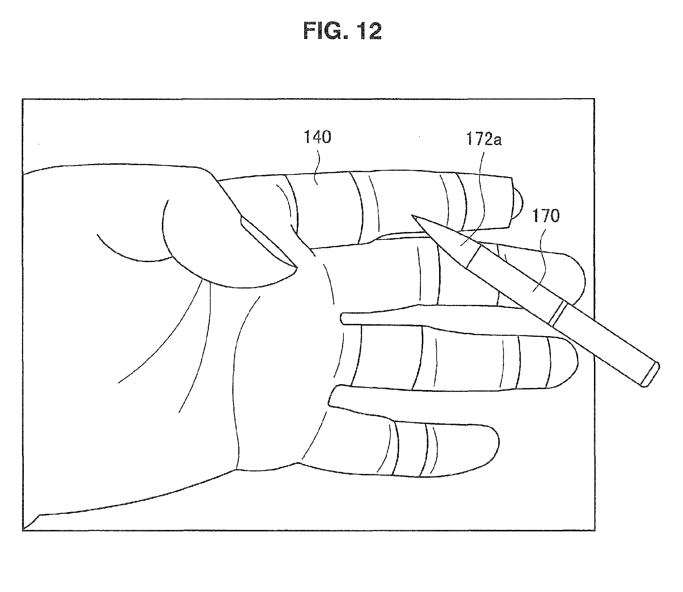

FIG. 12 is a diagram illustrating a second example of detection of the pressure timing of a phalanx. A pen 172, which is an example of a contacting object, presses a phalanx instead of a thumb in FIG. 12. The pen 172 is a member capable of emitting light. The tip unit 172a of the pen 172 emits light when the pen 172 presses a phalanx. The imaging unit 110 then shoots an image showing that the pen is emitting light, so that the identification 114 can easily detect the timing at which the pen presses a phalanx.

It has been described that the pen 172 emits light or the tape 140 changes its color once a phalanx is pressed, which is not, however, exclusive. For example, the information processing apparatus 100 may detect a motion vector of a finger, and may detect the timing at which a phalanx is pressed, on the basis of the detected motion vector.

A relative motion vector Vp of a finger whose phalanx is pressed can be obtained in the following expression.

$$Vp = V- Vh$$

where V represents a set of motion vectors of a finger, and Vh represents the average of motion vectors of the five fingers. The relative motion vector Vp is obtained with respect to an index finger, a middle finger, a ring finger, and a little finger.

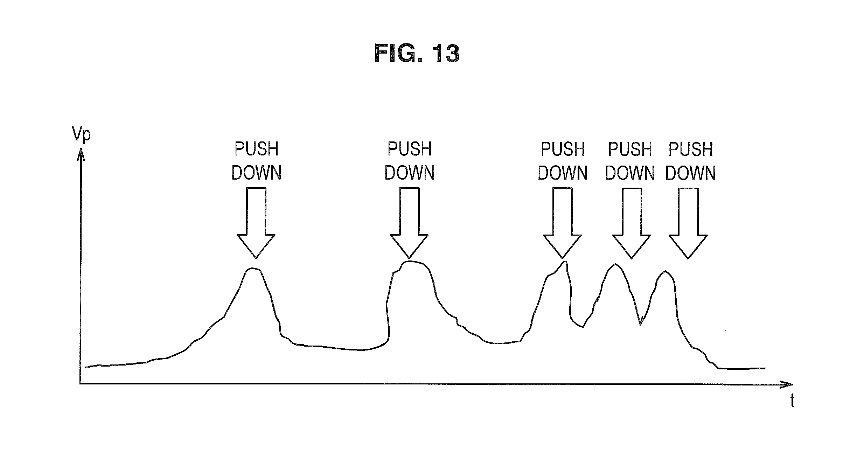

FIG. 13 is a diagram for describing the relative motion vector Vp. The relative motion vector Vp has the vector direction inverted before and after a phalanx is pressed. Accordingly, it is possible to detect the pressure timing by monitoring an inversion rate. The timing at which a phalanx is pressed can be detected by obtaining such a relative motion vector Vp.

When a phalanx is pressed, the pressed phalanx may have expansion, color, and shade changed. Accordingly, the identification unit 114 may monitor changes in the expansion, color, and shade of a phalanx in captured images input from the imaging unit 110 at predetermined intervals, and the phalanx may detect the pressure timing on the basis of the changes. This allows the pressure timing to be detected without indicators such as pens and thumb stalls or finger stalls.

It has been described that the identification unit 114 has a function of the detection unit detecting the pressure timing of a phalanx, which is not, however, exclusive. A different component from the identification unit 114 may detect the pressure timing of a phalanx.

<5. Operation Example of Information Processing Apparatus>

Next, an operation example of the information processing apparatus 100 according to an embodiment will be described. First to fourth operation examples will be described below as operation examples of the information processing apparatus 100. Once the CPU of the information processing apparatus 100 executes a program stored in the ROM, the information processing apparatus 100 operates. The executed program may also be stored in a recording medium such as a compact disk (CD), a digital versatile disk (DVD), and a memory card, or may also be downloaded from a server or the like via the Internet.

(First Operation Example)

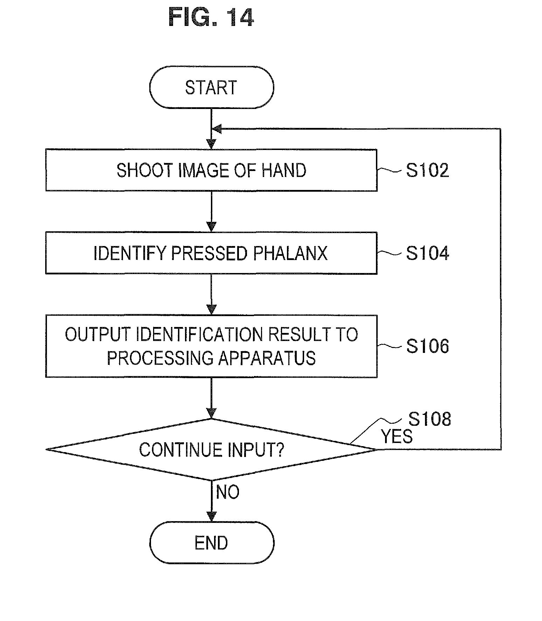

First of all, the first operation example of the information processing apparatus 100 according to an embodiment will be described with reference to FIG. 14. FIG. 14 is a flowchart for describing the first operation example of the information processing apparatus 100 according to an embodiment. The flowchart in FIG. 14 starts when the imaging unit 110 is, for example, turned on.

First of all, the imaging unit 110 shoots an image of a hand of a user who would like to input a character and the like (step S102). In other words, the imaging unit 110 outputs the captured image to the identification unit 114, the captured image showing that the user presses any phalanx of the fingers. The identification unit 114 then identifies which phalanx has been pressed by the user, on the basis of the input captured image (step S104). For example, the identifiers 114a to 1141 each corresponding to a numeric keypad decide evaluation values for the input captured image.

Next, the communication unit 116 outputs the identification results (evaluation values from the identifiers 114a to 1141, for example) to the processing apparatus 150 (step S106). Additionally, the communication unit 116 outputs the evaluation values to the processing apparatus 150 one by one. The processing apparatus 150 then decides which phalanx has been pressed by the user, on the basis of the input evaluation results. For example, the processing apparatus 150 determines that a key corresponding to the identifier having the highest evaluation value has been input, and executes processing corresponding to the input.

If input continues (step S108: Yes), the processing in the above-described steps S102 to 106 is repeated. To the contrary, if input is finished, the operation of the information processing apparatus 100 is completed.

According to the first operation example, it becomes possible to identify an input intended by a user by the user pressing his or her phalanx instead of a numeric keypad even if the user does not have a sensor and the like attached to the hand.

(Second Operation Example)

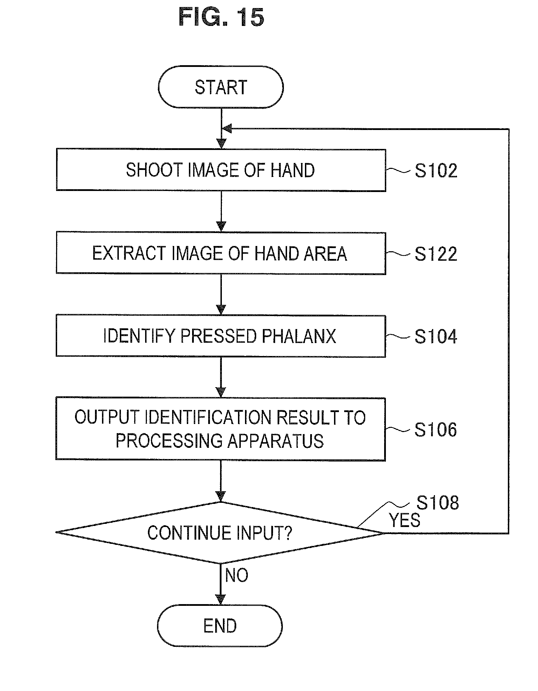

FIG. 15 is a flowchart for describing the second operation example of the information processing apparatus 100 according to an embodiment.

A hand area of a user in a captured image shot in step S102 is recognized, and an image of the recognized hand area is extracted in the second operation example illustrated in FIG. 15 (step S122). The identification unit 114 then identifies which phalanx has been pressed by the user from the extracted image (step S104).

According to the second operation example, it becomes possible to reduce an area of an image to be identified by the identification unit 114, and to enhance the determination accuracy. In that case, the learning unit 112 may acquire an image corresponding to a hand area in advance.

(Third Operation Example)

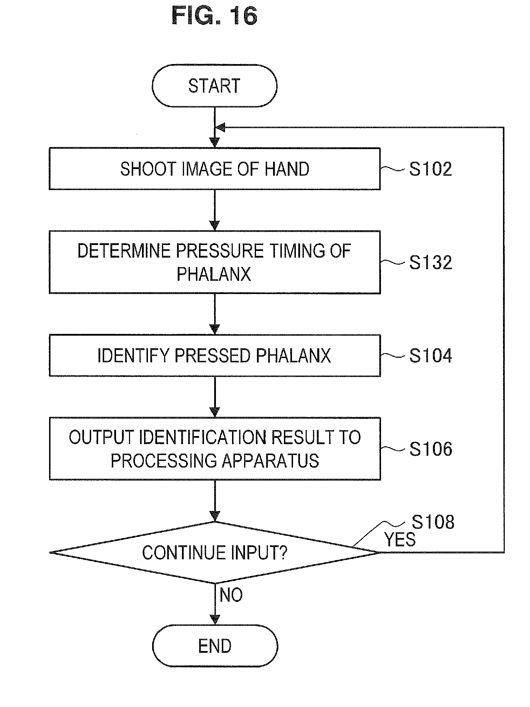

FIG. 16 is a flowchart for describing the third operation example of the information processing apparatus 100 according to an embodiment.

The identification unit 114 determines the pressure timing of a phalanx on the basis of a captured image shot in step S102 in the third operation example illustrated in FIG. 16 (step S132). Specifically, the identification unit 114 determines the pressure timing of a phalanx from a captured image shot when an indicator (such as a pen) which presses a phalanx emits light. The identification unit 114 then identifies which phalanx was pressed by a user at the pressure timing (step S104).

According to the third operation example, it becomes possible to limit the timing at which the identification unit 114 performs identification processing, and to enhance the determination accuracy of the identification unit 114. The power consumption of the processing by the identification unit 114 can also be cut, so that it is effective for mobile terminals such as smartphones having limited power.

(Fourth Operation Example)

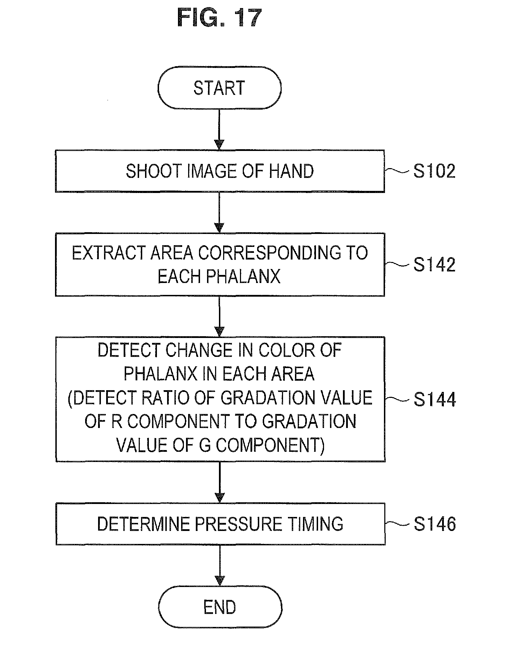

FIG. 17 is a flowchart for describing the fourth operation example of the information processing apparatus 100 according to an embodiment.

The identification unit 114 extracts an area corresponding to each phalanx from a captured image shot in step S102 in the fourth operation example in FIG. 17 (step S142). For example, the identification unit 114 extracts twelve areas corresponding to the proximal phalanges, the middle phalanges, and the distal phalanges of an index finger, a middle finger, a ring finger, and a little finger.

The identification unit 114 then detects a change in the color of a phalanx in each extracted area (step S144). Phalanges are generally reddish before the phalanges are pressed. Meanwhile, phalanges become yellowish once the phalanges are pressed. Accordingly, the identification unit 114 detects whether the color of a phalanx has varied between red and yellow. Specifically, the identification unit 114 references the ratio of the number of pixels for the R component (specifically, the number of pixels having the relationship R > G + 20) in the area to the number of pixels for the G component (the number of pixels having the relationship G - 10 < R < G + 10) to detect a variation in the color. The identification unit 114 then determines that a phalanx has been pressed once the identification unit 114 detects that the color has varied (step S146).

According to the fourth operation example, it becomes possible to appropriately detect the pressure timing of a phalanx by detecting a change in the color of the phalanx even if no indicators such as pens and styluses and no thumb stalls or finger stalls are used.

(Display Example of Information Processing Apparatus)

When a phalanx is pressed and an input is made, the display unit of the information processing apparatus 100 displays a hand of a user whose image is being shot, and input information.

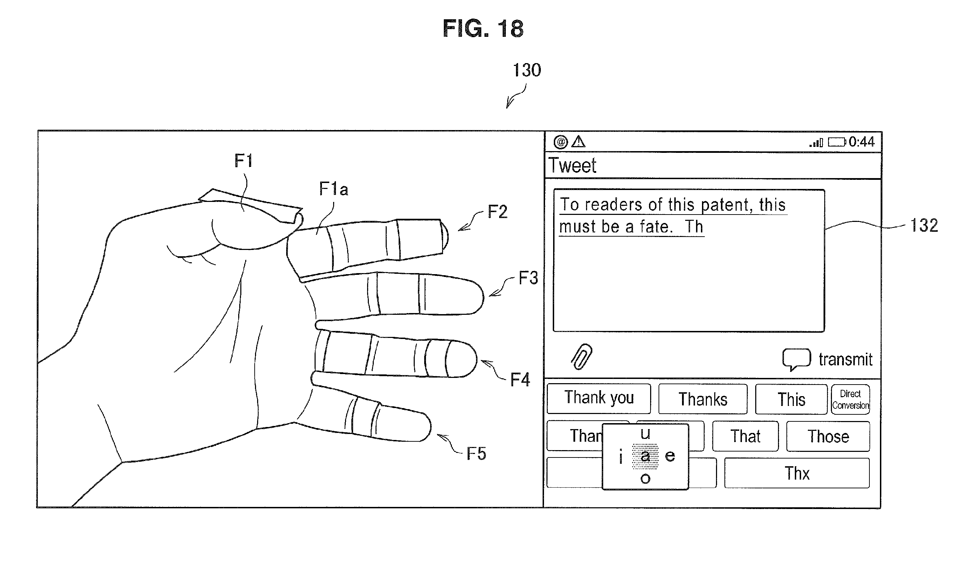

FIG. 18 is a diagram illustrating a display example of the display unit 130 of the information processing apparatus 100 according to an embodiment. The display unit 130 illustrated in FIG. 18 transparently displays a hand of a user whose image is being shot by the imaging unit 110, and displays an input screen 132 showing a character input in response to a phalanx pressed by the thumb F1. This allows a user to check the character input into the input screen 132 while pressing a phalanx of the index finger F2, the middle finger F3, the ring finger F4, or the little finger F5.

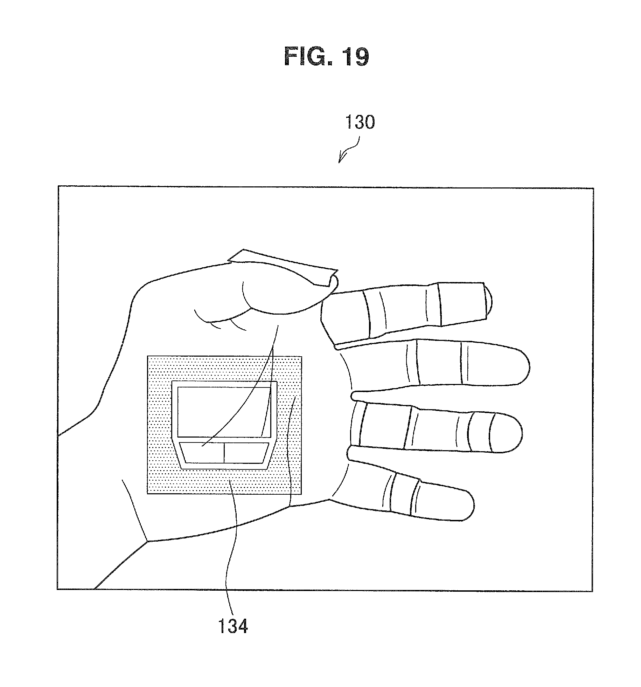

FIG. 19 is a diagram illustrating a display example of the display unit of the information processing apparatus 100 according to an embodiment. The display unit 130 illustrated in FIG. 19 transparently displays a hand of a user whose image is being shot by the imaging unit 110, and displays a touch pad 134 on an area corresponding to the palm. A touch operation on the displayed touch pad 134 allows a user to make an input instead of a mouse.

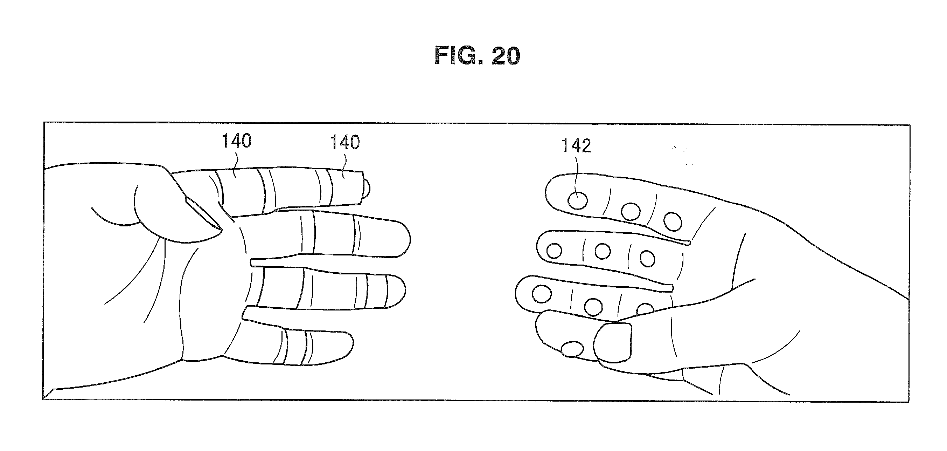

Additionally, it has been described that an input corresponding to a phalanx of a finger of one hand is made, which is not, however, exclusive. For example, as illustrated in FIG. 20, inputs corresponding to phalanges of fingers of both hands may also be made. In that case, inputs corresponding to more keys can be made. FIG. 20 is a diagram illustrating an example in which both hands are used.

It has been described that the imaging unit 110 shoots an image of all the five fingers, which is not, however, exclusive. For example, the imaging unit 110 may only shoot at least an image of a finger having a phalanx pressed. Furthermore, it has been described that input processing is performed by shooting an image showing that a thumb, a pen, or the like presses a phalanx, which is not, however, exclusive. For example, input processing may also be performed by shooting an image showing that a thumb, a pen, or the like is in contact with a phalanx.

<6. Hardware Configuration>

A hardware configuration and software included in the above-described information processing apparatus 100 cooperate to realize a display control operation to be performed by the information processing apparatus 100. Accordingly, the hardware configuration of the information processing apparatus 100 will be described below.

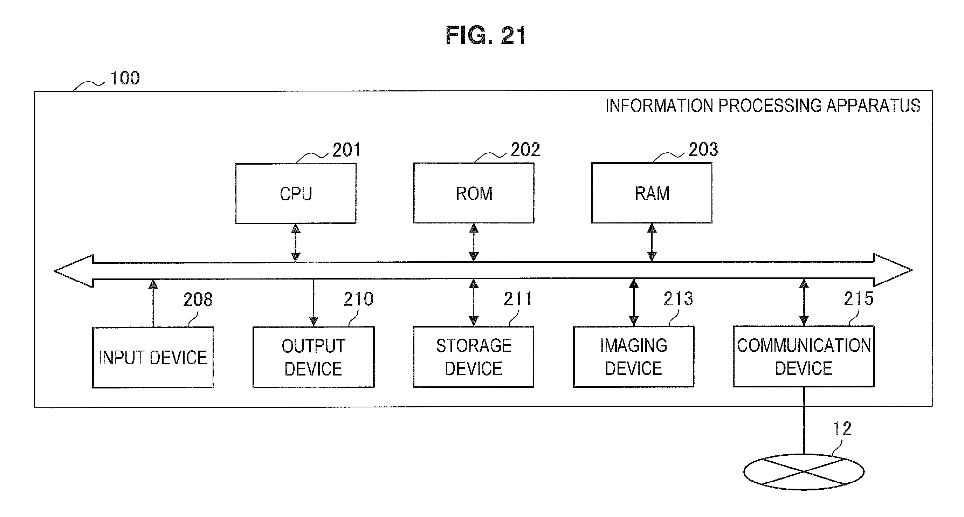

FIG. 21 is an explanatory diagram illustrating the hardware configuration of the information processing apparatus 100. As illustrated in FIG. 21, the information processing apparatus 100 includes a central processing unit (CPU) 201, read only memory (ROM) 202, random access memory (RAM) 203, an input device 208, an output device 210, a storage device 211, a drive 212, an imaging device 213, and a communication device 215.

The CPU 201 functions as a processing device and a control device, and controls the whole operation of the information processing apparatus 100 in accordance with a variety of programs. The CPU 201 may also be a microprocessor. The ROM 202 stores a program, an operation parameter, or the like that is used by the CPU 201. The RAM 203 temporarily stores a program used upon execution of the CPU 201, a parameter that changes as necessary for the execution, or the like. These are connected to each other by a host bus including a CPU bus.

The input device 208 includes an input means such as a mouse, a keyboard, a touch panel, a button, a microphone, a switch, and a lever for a user to input information, and an input control circuit that generates an input signal on the basis of the input from the user and outputs the input signal to the CPU 201. A user of the information processing apparatus 20 can input a variety of data to the information processing apparatus 20 and require the information processing apparatus 20 to perform a processing operation by operating the input device 208.

The output device 210 includes a display device such as a liquid crystal display (LCD) device, an organic light emitting diode (OLED) device, and a lamp. The output device 210 further includes an audio output device such as a speaker and a headphone. The display device, for example, displays a shot image, a generated image, and the like. Meanwhile, the audio output device converts audio data and the like to a sound, and outputs the sound.

The storage device 211 is a data storage device configured as an example of the storage unit of the information processing apparatus 100 according to the present embodiment. The storage device 211 may include a storage medium, a recording device that records data on a storage medium, a read-out device that reads data out from a storage medium, and a deletion device that deletes data recorded on a recording medium. The storage device 211 stores a program and a variety of data executed by the CPU 201.

The imaging device 213 includes an imaging optical system such as a photographing lens and a zoom lens that condenses light and a signal conversion element such as a charge coupled device (CCD) and a complementary metal oxide semiconductor (CMOS). The imaging optical system condenses light emitted from a subject to form an image of the subject on a signal conversion unit. The signal conversion element converts the formed image of the subject into an electric image signal.

The communication device 215 is, for example, a communication interface including a communication device for a connection to a network 12. The communication device 215 may also be a communication device supporting a wireless local area network (LAN), a communication device supporting Long Term Evolution (LTE), or a wired communication device performing wired communication.

Additionally, the network 12 is a wired or wireless transmission path through which information is transmitted and received between apparatuses connected to the network 12. The network 12 may include public networks such as the Internet, telephone networks and satellite networks, a variety of local area networks (LANs) including Ethernet (registered trademark), and wide area networks (WANs). The network 12 may also include leased line networks such as Internet protocol-virtual private networks (IP-VPNs).

<7. Conclusion>

As described above, among a plurality of input elements (keys on a numeric keypad, for example), the information processing apparatus 100 according to the present disclosure identifies an input element (key) corresponding to a phalanx in contact with a thumb in a captured image from the imaging unit 110. The information processing apparatus 100 also outputs the identification result from the identification unit 114 to the processing apparatus 150, which performs input processing corresponding to the plurality of input elements.

In that case, since a user can make an input by making the imaging unit 110 shoot an image showing that phalanges of his or her fingers are in contact, no sensors, electrodes, or the like do not have to be attached, thereby allowing the user to make an input in a simple configuration. Especially, when phalanges of four fingers (index finger, middle finger, ring finger, little finger) are used, inputs can be made in the same way as conventional numeric keypads. Accordingly, it is possible to prevent the operability of users from being diminished.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

The steps illustrated in the flowcharts in the embodiments naturally include processes performed in the described and chronological order, and further include processes that are not necessarily performed in chronological order, but are also performed in parallel or are individually performed. Needless to say, it is also possible to change the order as necessary even in the steps for chronologically performing the processes.

The processing by the information processing apparatus described herein may be realized by any one of software, hardware, and a combination of software and hardware. Programs included in the software are stored in advance, for example, in recording media provided inside or outside of the respective apparatuses. Each program is read out, for example, by random access memory (RAM) when each program is executed, and executed by a processor such as a CPU.

Additionally, the present technology may also be configured as below.

(1)
An information processing apparatus including:

an imaging unit configured to shoot an image showing that a phalanx of at least one or more fingers of a hand is in contact with a contacting object;
an identification unit configured to identify an input element among a plurality of input elements, the input element corresponding to the phalanx in contact with the contacting object in a captured image from the imaging unit; and
an output unit configured to output an identification result from the identification unit to a processing apparatus that performs input processing corresponding to the plurality of input elements.

(2)
The information processing apparatus according to (1),
wherein each phalanx of an index finger, a middle finger, a ring finger, and a little finger of the hand corresponds to each of the plurality of input elements.
(3)
The information processing apparatus according to (2),
wherein the plurality of input elements are included in a numeric keypad.
(4)
The information processing apparatus according to any one of (1) to (3),

wherein the contacting object is a thumb of the hand.

(5)

The information processing apparatus according to any one of (1) to (3),

wherein the contacting object emits light when the contacting object comes into contact with the phalanx, and

wherein the information processing apparatus further includes a detection unit configured to detect timing at which the contacting object comes into contact with the phalanx, on the basis of a light-emitting state of the contacting object.

(6)

The information processing apparatus according to any one of (1) to (4), further including:

a detection unit configured to detect timing at which the contacting object comes into contact with the phalanx, on the basis of changes in expansion of the phalanx and a color of the phalanx.

(7)

The information processing apparatus according to any one of (1) to (4), further including:

a detection unit configured to detect timing at which the contacting object comes into contact with the phalanx, on the basis of a motion vector of the finger.

(8)

The information processing apparatus according to any one of (1) to (7),

wherein the imaging unit shoots an image of an identifying object along with the contacting object, the identifying object being provided in an area corresponding to the phalanx of the finger.

(9)

The information processing apparatus according to (8),

wherein the identifying object is capable of displaying a color according to a phalanx in contact with the contacting object, and

wherein the imaging unit shoots an image showing the color displayed by the identifying object.

(10)

The information processing apparatus according to any one of (1) to (7),

wherein a worn object that the hand puts on is capable of displaying identification information indicating a phalanx when the contacting object comes into contact with the phalanx, and

wherein the imaging unit shoots an image of the identification information along with the contacting object.

(11)

The information processing apparatus according to any one of (1) to (10), further including:

a display unit configured to transparently display the finger whose image is being shot by the imaging unit, and to display a result obtained by the processing apparatus performing input processing on the basis of the identification result input from the output unit.

(12)

An information processing method including:

shooting an image with an imaging unit, the image showing that a phalanx of at least one or more fingers of a hand is in contact with a contacting object;

identifying an input element among a plurality of input elements, the input element corresponding to the phalanx in contact with the contacting object in a captured image from the imaging unit; and

outputting an identification result from the identification unit to a processing apparatus that performs input processing corresponding to the plurality of input elements.

(13)

A program for causing a computer to execute:

shooting an image with an imaging unit, the image showing that a phalanx of at least one or more fingers of a hand is in contact with a contacting object;

identifying an input element among a plurality of input elements, the input element corresponding to the phalanx in contact with the contacting object in a captured image from the imaging unit; and

outputting an identification result from the identification unit to a processing apparatus that performs input processing corresponding to the plurality of input elements.

Reference Signs List

| 1 | information processing system |
| 100 | information processing apparatus |
| 110 | imaging unit |
| 112 | learning unit |
| 114 | identification unit |
| 116 | communication unit |
| 118 | display control unit |
| 130 | display unit |
| 140 | tape |
| 142 | sticker |
| 150 | processing apparatus |

160　　　　glove
162, 164　　code
172　　　　pen

## Claims

**1.** An information processing apparatus comprising:

an imaging unit configured to shoot an image showing that a phalanx of at least one or more fingers of a hand is in contact with a contacting object;

an identification unit configured to identify an input element among a plurality of input elements, the input element corresponding to the phalanx in contact with the contacting object in a captured image from the imaging unit; and

an output unit configured to output an identification result from the identification unit to a processing apparatus that performs input processing corresponding to the plurality of input elements.

**2.** The information processing apparatus according to claim 1,
wherein each phalanx of an index finger, a middle finger, a ring finger, and a little finger of the hand corresponds to each of the plurality of input elements.

**3.** The information processing apparatus according to claim 2,
wherein the plurality of input elements are included in a numeric keypad.

**4.** The information processing apparatus according to claim 1,
wherein the contacting object is a thumb of the hand.

**5.** The information processing apparatus according to claim 1,
wherein the contacting object emits light when the contacting object comes into contact with the phalanx, and
wherein the information processing apparatus further includes a detection unit configured to detect timing at which the contacting object comes into contact with the phalanx, on the basis of a light-emitting state of the contacting object.

**6.** The information processing apparatus according to claim 1, further comprising:

a detection unit configured to detect timing at which the contacting object comes into contact with the phalanx, on the basis of changes in expansion of the phalanx and a color of the phalanx.

**7.** The information processing apparatus according to claim 1, further comprising:

a detection unit configured to detect timing at which the contacting object comes into contact with the phalanx, on the basis of a motion vector of the finger.

**8.** The information processing apparatus according to claim 1,
wherein the imaging unit shoots an image of an identifying object along with the contacting object, the identifying object being provided in an area corresponding to the phalanx of the finger.

**9.** The information processing apparatus according to claim 8,
wherein the identifying object is capable of displaying a color according to a phalanx in contact with the contacting object, and
wherein the imaging unit shoots an image showing the color displayed by the identifying object.

**10.** The information processing apparatus according to claim 1,
wherein a worn object that the hand puts on is capable of displaying identification information indicating a phalanx when the contacting object comes into contact with the phalanx, and
wherein the imaging unit shoots an image of the identification information along with the contacting object.

**11.** The information processing apparatus according to claim 1, further comprising:

a display unit configured to transparently display the finger whose image is being shot by the imaging unit, and to display a result obtained by the processing apparatus performing input processing on the basis of the identification result input from the output unit.

**12.** An information processing method comprising:

shooting an image with an imaging unit, the image showing that a phalanx of at least one or more fingers of a hand is in contact with a contacting object;

identifying an input element among a plurality of input elements, the input element corresponding to the phalanx in contact with the contacting object in a captured image from the imaging unit; and

outputting an identification result from the identification unit to a processing apparatus that performs input processing corresponding to the plurality of input elements.

13. A program for causing a computer to execute:

shooting an image with an imaging unit, the image showing that a phalanx of at least one or more fingers of a hand is in contact with a contacting object;
identifying an input element among a plurality of input elements, the input element corresponding to the phalanx in contact with the contacting object in a captured image from the imaging unit; and
outputting an identification result from the identification unit to a processing apparatus that performs input processing corresponding to the plurality of input elements.

# FIG. 1

<u>1</u>

# FIG. 2

100

IMAGING UNIT — 110

LEARNING UNIT — 112

IDENTIFICATION UNIT — 114

DISPLAY CONTROL UNIT — 118

COMMUNICATION UNIT — 116

PROCESSING APPARATUS — 150

# FIG. 3

# FIG. 4

330

## FIG. 5

114

| IDENTIFIER 114a<br>0.1 | IDENTIFIER 114b<br>0.2 | IDENTIFIER 114c<br>0.25 |
|---|---|---|
| IDENTIFIER 114d<br>0.7 | IDENTIFIER 114e<br>0.8 | IDENTIFIER 114f<br>0.3 |
| IDENTIFIER 114g<br>0.5 | IDENTIFIER 114h<br>0.6 | IDENTIFIER 114i<br>0.4 |
| IDENTIFIER 114j<br>0.2 | IDENTIFIER 114k<br>0.3 | IDENTIFIER 114l<br>0.1 |

# FIG. 6

340

140

F2

F3b

F3

F4

F5

F1

# FIG. 7

FIG. 8

FIG. 9

## FIG. 10

# FIG. 11

FIG. 12

# FIG. 13

# FIG. 14

```
                    ┌─────────────┐
                    │    START    │
                    └──────┬──────┘
                           │
                           ▼ ◄──────────────────────┐
          ┌────────────────────────────┐            │
          │    SHOOT IMAGE OF HAND      │ ～ S102    │
          └──────────────┬─────────────┘            │
                         │                           │
                         ▼                           │
          ┌────────────────────────────┐            │
          │   IDENTIFY PRESSED PHALANX  │ ～ S104    │
          └──────────────┬─────────────┘            │
                         │                           │
                         ▼                           │
          ┌────────────────────────────┐            │
          │ OUTPUT IDENTIFICATION RESULT│            │
          │   TO PROCESSING APPARATUS   │ ～ S106    │
          └──────────────┬─────────────┘            │
                         │                           │
                         ▼                 ～ S108   │
              ╱────────────────────╲  YES           │
             ╱   CONTINUE INPUT?     ╲───────────────┘
              ╲────────────────────╱
                         │ NO
                         ▼
                  ┌─────────────┐
                  │     END     │
                  └─────────────┘
```

# FIG. 15

```
         ┌─────────────┐
         │    START    │
         └──────┬──────┘
                │
                ▼
    ┌──────────────────────────┐
    │   SHOOT IMAGE OF HAND     │──── S102
    └────────────┬─────────────┘
                 │
                 ▼
    ┌──────────────────────────┐
    │ EXTRACT IMAGE OF HAND AREA│──── S122
    └────────────┬─────────────┘
                 │
                 ▼
    ┌──────────────────────────┐
    │  IDENTIFY PRESSED PHALANX │──── S104
    └────────────┬─────────────┘
                 │
                 ▼
    ┌──────────────────────────┐
    │OUTPUT IDENTIFICATION RESULT TO│──── S106
    │   PROCESSING APPARATUS    │
    └────────────┬─────────────┘
                 │
                 ▼            S108
         ◇─────────────────◇  YES
         CONTINUE INPUT?
         ◇─────────────────◇
                 │ NO
                 ▼
         ┌─────────────┐
         │     END     │
         └─────────────┘
```

# FIG. 16

```
        START
          │
          ▼
┌─────────────────────────┐
│   SHOOT IMAGE OF HAND   │ ── S102
└─────────────────────────┘
          │
          ▼
┌─────────────────────────┐
│ DETERMINE PRESSURE TIMING OF │ ── S132
│        PHALANX          │
└─────────────────────────┘
          │
          ▼
┌─────────────────────────┐
│  IDENTIFY PRESSED PHALANX │ ── S104
└─────────────────────────┘
          │
          ▼
┌─────────────────────────┐
│ OUTPUT IDENTIFICATION RESULT TO │ ── S106
│   PROCESSING APPARATUS  │
└─────────────────────────┘
          │
          ▼
                              S108
      CONTINUE INPUT?    ──── YES
          │
         NO
          ▼
         END
```

# FIG. 17

```
          ( START )
              │
              ▼
┌──────────────────────────────┐
│     SHOOT IMAGE OF HAND       │──── S102
└──────────────────────────────┘
              │
              ▼
┌──────────────────────────────┐
│  EXTRACT AREA CORRESPONDING TO │──── S142
│        EACH PHALANX           │
└──────────────────────────────┘
              │
              ▼
┌──────────────────────────────┐
│    DETECT CHANGE IN COLOR OF   │
│     PHALANX IN EACH AREA       │
│ (DETECT RATIO OF GRADATION VALUE│──── S144
│  OF R COMPONENT TO GRADATION   │
│     VALUE OF G COMPONENT)      │
└──────────────────────────────┘
              │
              ▼
┌──────────────────────────────┐
│    DETERMINE PRESSURE TIMING   │──── S146
└──────────────────────────────┘
              │
              ▼
          ( END )
```

**FIG. 18**

Tweet

To readers of this patent, this
must be a fate. Th

transmit

Thank you    Thanks    That    This    Those

Than    Thx

Direct Conversion

FIG. 19

FIG. 20

**FIG. 21**

INFORMATION PROCESSING APPARATUS

100

| 201 | 202 | 203 |
|---|---|---|
| CPU | ROM | RAM |

| 208 | 210 | 211 | 213 | 215 |
|---|---|---|---|---|
| INPUT DEVICE | OUTPUT DEVICE | STORAGE DEVICE | IMAGING DEVICE | COMMUNICATION DEVICE |

12

EP 2 849 035 A1

## INTERNATIONAL SEARCH REPORT

| International application No. |
|---|
| PCT/JP2013/060839 |

A.   CLASSIFICATION OF SUBJECT MATTER
*G06F3/0346*(2013.01)i, *G06F3/023*(2006.01)i, *G06F3/0489*(2013.01)i

According to International Patent Classification (IPC) or to both national classification and IPC

B.   FIELDS SEARCHED

Minimum documentation searched (classification system followed by classification symbols)
G06F3/0346, G06F3/023, G06F3/0489

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | US 2010/0177039 A1  (Isaac GRANT), 15 July 2010 (15.07.2010), paragraphs [0013] to [0019]; all figures (Family: none) | 1-13 |
| A | JP 10-207602 A  (Canon Inc.), 07 August 1998 (07.08.1998), abstract; paragraph [0036] (Family: none) | 1-13 |
| A | JP 2000-298544 A  (Matsushita Electric Industrial Co., Ltd.), 24 October 2000 (24.10.2000), abstract; all drawings (Family: none) | 1-13 |

| ☒   Further documents are listed in the continuation of Box C. | ☐   See patent family annex. |
|---|---|

\*     Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 04 July, 2013 (04.07.13) | 16 July, 2013 (16.07.13) |

| Name and mailing address of the ISA/ Japanese Patent Office | Authorized officer |
|---|---|
| Facsimile No. | Telephone No. |

Form PCT/ISA/210 (second sheet) (July 2009)

34

**INTERNATIONAL SEARCH REPORT**

| International application No. |
| --- |
| PCT/JP2013/060839 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2010-86367 A  (Sony Corp.),<br>15 April 2010 (15.04.2010),<br>abstract; all drawings<br>(Family: none) | 1-13 |
| A | JP 2011-180843 A  (Sony Corp.),<br>15 September 2011 (15.09.2011),<br>abstract; fig. 14<br>& US 2011/0210928 A1      & EP 2363793 A2<br>& CN 102193728 A          & KR 10-2011-0099166 A | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001242983 A
- JP 2010125287 A
- JP 2011221699 A